# EUROPEAN PATENT APPLICATION

(11) **EP 4 439 899 A1**
(43) Date of publication of application: **02.10.2024**
(21) Application number: 23168536.3
(22) Date of filing: 18.04.2023
(51) Int. Cl.: H02J 1/00, H02J 1/10, H02M 7/483, H02M 1/00

(54) **APPARATUS FOR POWER CONVERSION AND METHOD FOR OPERATING THE APPARATUS**

(30) Priority: 31.03.2023 CN 202310341933
(71) Applicant: Hitachi Energy Ltd, 8050 Zürich (CH)
(72) Inventor: HUANG, Xing, Beijing, 100024 (CN); YANG, XiaoBo, Beijing, 100015 (CN); TUCKEY, Andrew Mark, Livingstone, 0837 (AU)
(74) Representative: Vossius & Partner Patentanwälte Rechtsanwälte mbB

(57) **Abstract**

An apparatus for power conversion and a method for operating the apparatus are provided. The apparatus comprises: at least one of a first partial power converter (PPC) string and a second PPC string, wherein the first PPC string comprising more than one series-connected PPCs, wherein respective second port of the more than one series-connected PPCs are connected in series to further connect to a DC bus; and wherein the second PPC string comprising at least one series-connected PPC and at least one PPC set, wherein each PPC set comprises more than one parallel-connected PPCs, the respective second ports of the more than one parallel-connected PPCs are connected in parallel and further connected to a port of the PPC set, and respective second ports of the at least one series-connected PPC and the port of the at least one PPC set are connected in series to further connect to the DC bus.

## Description

### TECHNICAL FIELD

The present disclosure relates to the field of power conversion, and more specifically, to an apparatus for power conversion and a method for operating an apparatus for power conversion.

### BACKGROUND

Energy Storage System (ESS) is a system that contains, for example, batteries (such as, lithium batteries, lead batteries) as energy storage carriers to store electrical energy and supply electrical energy for a certain period of time. The ESS is widely used in power grids to adjust the peak and frequency of the power grids, thereby ensuring the safe operation of the power grids.

Nowadays, in addition to batteries, hybrid DC sources (for example, PV panels) are expected to be integrated into the ESS as power sources. Furthermore, the DC load, rather than the power source are also expected to be integrated into the ESS.

### SUMMARY

The present disclosure provides an apparatus for power conversion and a method for operating the apparatus.

According to an aspect of the present disclosure, an apparatus for power conversion is disclosed. The apparatus includes at least one of a first partial power converter (PPC) string and a second PPC string, wherein the first PPC string comprising more than one series-connected PPCs, wherein respective second port of the more than one series-connected PPCs are connected in series to further connect to a DC bus; and wherein the second PPC string comprising at least one series-connected PPC and at least one PPC set, wherein each PPC set comprises more than one parallel-connected PPCs, the respective second ports of the more than one parallel-connected PPCs are connected in parallel and further connected to a port of the PPC set, and respective second ports of the at least one series-connected PPC and the port of the at least one PPC set are connected in series to further connect to the DC bus, wherein, for each PPC in the apparatus, a first port of the PPC and the second port of the PPC have one common terminal, and wherein the at least one of the first PPC string and the second PPC string is connected in parallel with a DC bus, and wherein, the first port of at least one PPC in the apparatus is connected to a load, while the respective first ports of other PPCs in the apparatus are connected to power sources, wherein at least one of the power sources is a power storage source.

According to some embodiments, the at least one of the first PPC string and the second PPC string is further connected to a grid-connected AC/DC converter, wherein an input of the grid-connected AC/DC converter is connected to the DC bus, and an output of the grid-connected AC/DC converter is connected to the gird.

According to some embodiments, at least one of the power sources is a PV source.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms one port of the first port and the second port of the PPC, and a DC port of the first AC/DC converter and the DC port of the second AC/DC converter are connected in series to form the other port of the first port and the second port.

According to some embodiments, for the PPC connected to the PV source, in response to that the DC port of the second AC/DC converter forms the first port, and a DC port of the first AC/DC converter and the DC port of the second AC/DC converter are connected in series to form the second port, the second AC/DC converter comprises at least one controllable switch, and the first AC/DC converter is an uncontrollable rectifier, and in response to that the DC port of the second AC/DC converter forms the second port, and a DC port of the first AC/DC converter and the DC port of the second AC/DC converter are connected in series to form the first port, the first AC/DC converter comprises at least one controllable switch, and the second AC/DC converter is an uncontrollable rectifier.

According to some embodiments, for the PPC connected to the load, in response to that the DC port of the second AC/DC converter forms the first port, and a DC port of the first AC/DC converter and the DC port of the second AC/DC converter are connected in series to form the second port, the first AC/DC converter comprises at least one controllable switch, and the second AC/DC converter is an uncontrollable rectifier, andin response to that the DC port of the second AC/DC converter forms the second port, and a DC port of the first AC/DC converter and the DC port of the second AC/DC converter are connected in series to form the first port, the second AC/DC converter comprises at least one controllable switch, and the first AC/DC converter is an uncontrollable rectifier.

According to some embodiments, in the PPC, each of the first AC/DC converter and the second AC/DC converter comprises at least one controllable switch.

According to another aspect of the present disclosure, a method of operating the apparatus of power conversion mentioned above, comprising: determining a mode of the apparatus according to a DC bus voltage of the DC bus, wherein the mode of the apparatus is overvoltage mode, normal mode or undervoltage mode; and controlling the PPCs in the apparatus according to the mode of the apparatus.

According to some embodiments, wherein the string of PPCs in the apparatus is further connected to a grid-connected AC/DC converter, wherein an input of the grid-connected AC/DC converter is connected to the DC bus, and an output of the grid-connected AC/DC converter is connected to the gird, and wherein at least one of the power sources is a PV source, and wherein the controlling the PPCs in the apparatus according to the mode of the apparatus comprises: in response to the apparatus being in the overvoltage mode, generating a total power reference based on a DC bus voltage reference and the DC bus voltage; and controlling the PPCs connected to the load and the PV based on the total power reference, and controlling the power of the PPC connected to the power storage source to be a maximum input power of the corresponding power storage source.

According to some embodiments, the controlling the PPCs connected to the load and the PV based on the total power reference comprises: in response to the total power reference being lower than a power capacity of the load, increasing the output power reference of the PPC connected to the load by adding the total power reference, and setting the PPC connected to the PV source at the MPPT mode, wherein the power capacity of the load is a difference between a maximum power of the load connected to the apparatus and a power of the load connected to the apparatus; in response to the total power reference being higher than or equal to the power capacity of the load and being lower than the sum of power capacity of the load and a power capacity of the grid-connected AC/DC converter, increasing the output power reference of the PPC connected to the load by adding the power capacity of the load, and setting the PPC connected to the PV at the MPPT mode, wherein a output power reference of the grid-connected AC/DC converter is increased by a difference between the total power reference and the power capacity of the load, and the power capacity of the grid-connected AC/DC converter is a difference between a maximum output power of the grid-connected AC/DC converter and a output power of the grid-connected AC/DC converter; and in response to the total power reference being higher than or equal to the sum of the power capacity of the load connected to the apparatus and a power capacity of the grid-connected AC/DC converter, increasing the output power reference of the PPC connected to the load by adding the power capacity of the load, decreasing the input power reference of the PPC connected to the PV by a difference between the total power reference and the sum of the power capacity of the load connected to the apparatus and the power capacity of the grid-connected AC/DC converter, wherein the power reference of the grid-connected AC/DC converter is increased by adding the power capacity of the grid-connected AC/DC converter.

According to some embodiments, wherein the string of PPCs in the apparatus is further connected to a grid-connected AC/DC converter, wherein an input of the grid-connected AC/DC converter is connected to the DC bus, and an output of the grid-connected AC/DC converter is connected to the gird, and wherein at least one of the power sources is a PV source, and wherein the controlling the PPCs in the apparatus according to the mode of the apparatus comprises: in response to the apparatus being in the normal mode, generating a total power reference based on a DC bus voltage reference and the DC bus voltage; and controlling the PPC connected to the power storage source based on the total power reference, and setting the PPC connected to the PV at the MPPT mode.

According to some embodiments, the string of PPCs in the apparatus is further connected to a grid-connected AC/DC converter, wherein an input of the grid-connected AC/DC converter is connected to the DC bus, and an output of the grid-connected AC/DC converter is connected to the gird, and wherein at least one of the power sources is a PV source, and wherein controlling the PPCs in the apparatus according to the mode of the apparatus comprises: in response to the apparatus being in the undervoltage mode, generating a total power reference based on a DC bus voltage reference and the DC bus voltage; and controlling the PPCs connected to the load based on the total power reference, setting the PPC connected to the PV at the MPPT mode, and controlling the power of the PPC connected to the power storage source to be a maximum output power of the corresponding power storage source.

According to some embodiments, the controlling the PPCs connected to the load based on the total power reference comprises: in response to the total power reference being higher than or equal to a power capacity of the grid-connected AC/DC converter, decreasing the output power reference of the PPC connected to the load by a difference between the total power reference and a power capacity of the grid-connected AC/DC converter, wherein a output power reference of the grid-connected AC/DC converter is decreased by the power capacity of the grid-connected AC/DC converter, and the power capacity of the grid-connected AC/DC converter is a sum of a output power of the grid-connected AC/DC converter and a maximum input power of the grid-connected AC/DC converter, wherein the output power reference of the grid-connected AC/DC converter is decreased by the total power reference in response to the total power reference being lower than the power capacity of the grid-connected AC/DC converter.

According to some embodiments, the determining a mode of the apparatus according to a DC bus voltage of the DC bus comprises: in response to the apparatus being in the overvoltage mode and the DC bus voltage being lower than a first upper limit, or the apparatus being in the undervoltage mode and the DC bus voltage being higher than a first under limit, setting the apparatus in the normal mode; in response to the apparatus being in the normal mode and the DC bus voltage being higher than a second upper limit, setting the apparatus in the overvoltage mode, wherein the second upper limit is higher than the first upper limit; and in response to the apparatus being in the normal mode and the DC bus voltage being lower than a second under limit, setting the apparatus in the undervoltage mode, wherein the second under limit is lower than the first lower limit.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms one port of the first port and the second port of the PPC, and a DC port of the first AC/DC converter and the DC port of the second AC/DC converter are connected in series to form the other port of the first port and the second port, and each of the first AC/DC converter and the second AC/DC converter comprises at least one controllable switch, and wherein the controlling the PPCs in the apparatus according to the mode of the apparatus comprises: in response to that the DC port of the second AC/DC converter forms the first port, and a DC port of the first AC/DC converter and the DC port of the second AC/DC converter are connected in series to form the second port, controlling the first AC/DC converter of the PPC based on a respective control signal for the PPC, and setting the second AC/DC converter in an uncontrolled mode when the PPC is in the charging mode, and controlling the second AC/DC converter of the PPC based on the respective control signal for the PPC, and setting the first AC/DC converter in the uncontrolled mode when the PPC is in the discharging mode; and in response to that the DC port of the second AC/DC converter forms the second port, and the DC port of the first AC/DC converter and the DC port of the second AC/DC converter are connected in series to form the first port, controlling the first AC/DC converter of the PPC based on the respective control signal for the PPC, and setting the second AC/DC converter in an uncontrolled mode when the PPC is in the discharging mode, and controlling the second AC/DC converter of the PPC based on the respective control signal for the PPC, and setting the first AC/DC converter in the uncontrolled mode when the PPC is in the charging mode, wherein, in the uncontrolled mode, all controllable switches in the AC/DC converter are held open or held closed.

It should be understood that the content described in this section is not intended to identify critical or important features of the embodiments of the present disclosure, and is not used to limit the scope of the present disclosure either. Other features of the present disclosure will be easily understood through the following specification.

### BRIEF DESCRIPTION OF THE DRAWINGS

The drawings exemplarily show embodiments and form a part of the specification, and are used to illustrate example implementations of the embodiments together with a written description of the specification. The embodiments shown are merely for illustrative purposes and do not limit the scope of the claims. Throughout the drawings, like reference signs denote like but not necessarily identical elements.
Fig. 1 is a schematic diagram illustrating an apparatus of power conversion according to an embodiment of the present disclosure.
Fig. 2 is a schematic diagram illustrating an apparatus of power conversion according to an embodiment of the present disclosure.
Figs. 3A-3B are schematic diagrams illustrating the connection configuration of the PPC in Fig. 1 according to an embodiment of the present disclosure.
Fig. 4 is a flowchart illustrating a method for operating the apparatus of power conversion according to an embodiment of the present disclosure.
Fig. 5 is a schematic diagram illustrating the modes of the apparatus of power conversion according to an embodiment of the present disclosure.
Fig. 6 is a flowchart illustrating the process of controlling the PPCs in the apparatus according to the mode of the apparatus in Fig. 4 according to an embodiment of the present disclosure.
Fig. 7 is a schematic diagram illustrating a controlling loop of controlling the PPCs in the apparatus according to an embodiment of the present disclosure.
Fig. 8 is a flowchart illustrating the process of controlling the PPCs in the apparatus according to the mode of the apparatus in Fig. 4 according to an embodiment of the present disclosure.
Fig. 9 is a schematic diagram illustrating a controlling loop of controlling the PPCs in the apparatus according to an embodiment of the present disclosure.
Fig. 10 is a flowchart illustrating the process of controlling the PPCs in the apparatus according to the mode of the apparatus in Fig. 4 according to an embodiment of the present disclosure.
Fig. 11 is a schematic diagram illustrating a controlling loop of controlling the PPCs in the apparatus according to an embodiment of the present disclosure.

### DETAILED DESCRIPTION OF THE EMBODIMENTS

The present disclosure will be further described in detail below with reference to the drawings and embodiments. It can be understood that embodiments described herein are used merely to explain a related disclosure, rather than limit the disclosure. It should be additionally noted that, for ease of description, only parts related to the related disclosure are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules. As used herein, the term "and/or" includes any and all combinations of one or more of the associated listed items. The term "based on" is to be construed as "based at least in part on".

According to embodiments of the present disclosure, an apparatus for power conversion and a method for operating the apparatus are provided.

According to some embodiments, an apparatus for power conversion is disclosed. The apparatus includes at least one of a first partial power converter (PPC) string and a second PPC string, wherein the first PPC string comprising more than one series-connected PPCs, wherein respective second port of the more than one series-connected PPCs are connected in series to further connect to a DC bus; and wherein the second PPC string comprising at least one series-connected PPC and at least one PPC set, wherein each PPC set comprises more than one parallel-connected PPCs, the respective second ports of the more than one parallel-connected PPCs are connected in parallel and further connected to a port of the PPC set, and respective second ports of the at least one series-connected PPC and the at least one PPC set are connected in series to further connect to the DC bus, wherein, for each PPC in the apparatus, a first port of the PPC and the second port of the PPC have one common terminal, and wherein the at least one of the first PPC string and the second PPC string is connected in parallel with a DC bus, and wherein, the first port of at least one PPC in the apparatus is connected to a load, while the respective first ports of other PPCs in the apparatus are connected to power sources, wherein at least one of the power sources is a power storage source.

According to the embodiments of the present disclosure, the apparatus of power conversion can provide at least the following advantages:
1) A hybrid apparatus of power conversion can be provided, which is connected to the DC load in additional to the conventional power sources, thereby applicable to more situations.
2) The unbalanced current between the parallel connected strings of power sources (such as the battery cells) can be limited, thereby the lifetime of the power sources can be extended;
3) More accurate control for each power source can be provided, thereby making full use of the energy of each power source, even if the multiple power sources in one string are in different status (for example, in different SOC status)
4) More than one PPCs can be connected in series to build DC bus with higher voltage level, which makes the connection to the MV system easier (for example, through a grid-connected AC/DC converter);
5) With the PPC, the power efficiency can be improved and the capital cost can be reduced, thereby providing a low cost solution;
6) Power sources can be decoupled with each other, so that power sources with different characteristics (for example, power sources from different suppliers) can be used together, and new power sources can be added to augment the capacity or prolong the lifetime of the apparatus;
7) PPCs based on power electronics can sense the power source fault and eliminate the fault influence, so that the fault influence can be limited, thereby providing fast fault diagnosis, location and clearance; and
8) The modular designed PPCs are easy to be replaced and have a limited maintenance cost, thereby reducing the maintenance cost of the whole apparatus.

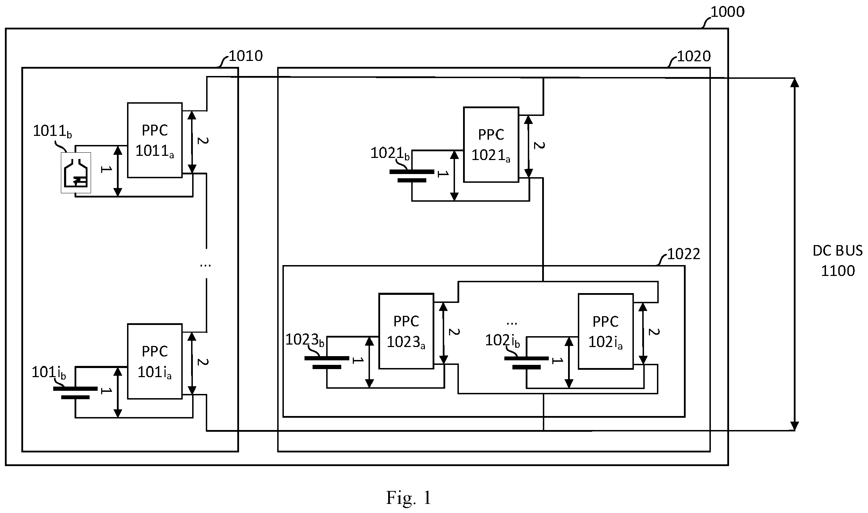

Fig. 1 is a schematic diagram illustrating an apparatus of power conversion 1000 according to an embodiment of the present disclosure.

According to some embodiments, the apparatus of power conversion 1000 includes at least one of a first PPC string 1010 and a second PPC string 1020, wherein the at least one of a first PPC string 1010 and a second PPC string 1020 is connected in parallel with a DC bus 1100. As shown in Fig. 1, the apparatus of power conversion 1000 includes both the first PPC string 1010 and the second PPC string 1020, but the apparatus of power conversion 1000 may include only one of the first PPC string 1010 and the second PPC string 1020. The structure of the first PPC string 1010 and the second PPC string 1020 is illustrated below with reference to Fig. 1 respectively.

As shown in Fig. 1, the first PPC string 1010 includes more than one series-connected PPCs 1011ₐ, ... , 101iₐ, wherein the second ports of the PPCs 1011ₐ, ..., 101iₐ in the string 1010 are connected in series to further connect to a DC bus 1100.

According to some embodiments, "the second ports of the PPCs are connected in series" means that, for each PPC, one terminal of the second port of the PPC is connected to a terminal of the second port of an adjacent PPC closer to a first terminal of the DC bus, and the other terminal of the second port of the PPC is connected to a terminal of the second port of another adjacent PPC closer to a second terminal of the DC bus.

As shown in Fig. 1, the second string includes at least one series-connected PPC 1021ₐ and at least one PPC set 1022, wherein each PPC set includes more than one parallel-connected PPCs, for example, the PPC set 1022 includes PPC 1023ₐ, ..., 102jₐ that are connected in parallel. According to some embodiments, in each PPC set, a respective second port of each PPC of the more than one parallel-connected PPCs is connected in parallel and further connected to a port of the PPC set. For example, the second port of PPC 1023ₐ, ..., 102jₐ are connected in parallel and further connected to the port of the PPC set 1022. According to some embodiments, in the second PPC string 1200, a respective second port of each of the at least one series-connected PPC 1021ₐ and the at least one PPC set 1022 is connected in series.

According to some embodiments, "respective second ports of the at least one series-connected PPC and the port of the at least one PPC set are connected in series" means that, for each PPC or PPC set, one terminal of the second port of the PPC or the port of PPC set is connected to an terminal of the second port of the adjacent PPC or the port of the adjacent PPC set closer to a first terminal of the DC bus, and the other terminal of the second port of the PPC or the port of the PPC set is connected to a terminal of the second port of the adjacent PPC or the port of the adjacent PPC set closer to a second terminal of the DC bus.

According to some embodiments, the first port of at least one PPC in the apparatus is connected to a load, while the respective first ports of other PPCs in the apparatus are connected to power sources. For example, as shown in Fig. 1, the first port of the PPC 1011ₐ is connected to the load 1011_{b}, and the first ports of the other PPCs in the apparatus are connected to power sources (for example, the first port of the PPC 101iₐ is connected to the power source 101i1_{b}).

According to some embodiments, at least one of the power sources connected to the PPCs in the apparatus is a power storage source, such as the battery, the supercapacitor, etc. For example, the power source 101i_{b} in Fig. 1 can be a battery.

According to some embodiments, as shown in Fig. 1, for each PPC in the apparatus, the first port of the PPC and the second port of the PPC have one common terminal. According to some embodiments, the PPC in the apparatus comprises at least one controllable switch, wherein the controllable switch is able to be controlled (for example, according to a turn-on/ turn-off signal) and may include IGBT, IGCT, MOSFET, GTO, a triode and the like.

Herein, the partial power converter in present disclosure refers to a converter having partial power processing characteristic, i.e., a fraction of the power goes directly from the source to the load bypassing the converter and the remaining power is processed by the converter, so that the overall efficiency can be improved, and the capital cost can be decreased compared with the full power converter.

According to some embodiments, in addition to at least one of the first PPC string 1100 and the second PPC string 1200, the apparatus 1000 may also include other string of PPCs, such as another string of series-connected PPCs or series-parallel-connected PPCs, or a string of one PPC.

According to some embodiments, the string of PPCs in the apparatus (i.e., the at least one of the first PPC string and the second PPC string) is further connected to a grid-connected AC/DC converter, wherein an input of the grid-connected AC/DC converter is connected to the DC bus, and an output of the grid-connected AC/DC converter is connected to the gird. According to the embodiments of the present disclosure, through connecting to the grid through the grid-connected AC/DC converter, the power from the apparatus can be fed to the grid, and the power from the grid can be provided to the apparatus.

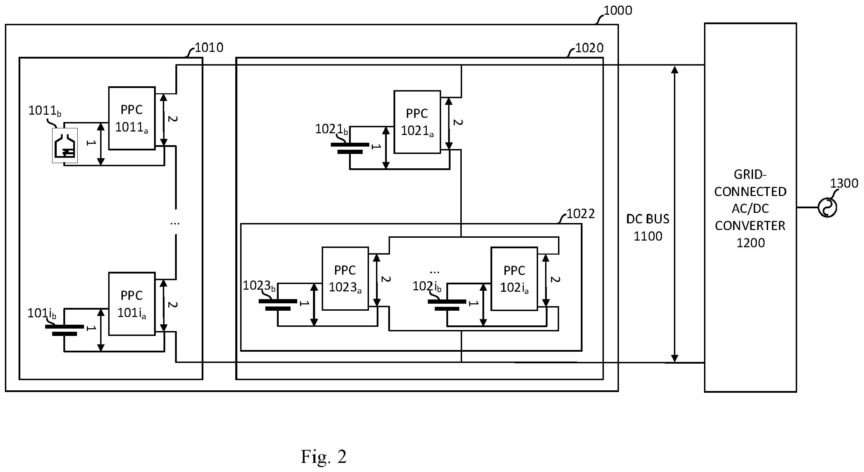

Fig. 2 is a schematic diagram illustrating an apparatus of power conversion according to an embodiment of the present disclosure. The apparatus of power conversion 1000 and the DC bus 1100 in Fig. 2 are similar to the apparatus of power conversion 1000 and the DC bus 1100 in Fig. 1, and the corresponding description are omitted for the purpose of conciseness.

As shown in Fig. 2, the first PPC string 1010 and the second PPC string 1020 is further connected to a grid-connected AC/DC converter 1200. In this configuration, an input of the grid-connected AC/DC converter 1200 is connected to the DC bus 1100, and the output of the grid-connected AC/DC converter 1200 is connected to the grid 1300.

According to the embodiments of the present disclosure, through connecting to the grid through the AC/DC converter, the apparatus of power conversion can be used as power storage in the grid.

According to some embodiments, at least one of the power sources is a PV source. For example, while the power source 101i_{b} in Fig. 1 can be a battery, the power source 1021_{b} can be a PV source. According to the embodiments of the present disclosure, by connecting the PV source to the PPC in the apparatus, the power from the PV source can be used to improve the economical efficiency of the apparatus.

According to some embodiments, wherein the PPC in the apparatus includes a first AC/DC converter and a second AC/DC converter coupled at AC ports of the first AC/DC converter and the second AC/DC converter, and wherein a DC port of the second AC/DC converter forms one port of the first port and the second port of the PPC, and a DC port of the first AC/DC converter and the DC port of the second AC/DC converter are connected in series to form the other port of the first port and the second port. According to the embodiments of the present disclosure, a part of the power goes directly from one port of the PPC to the other of the PPC by bypassing the first AC/DC converter and the second AC/DC converter and the remaining power is processed by the first AC/DC converter and the second AC/DC converter and then delivered to the other port of the PPC, so that a rated power of each of the first AC/DC converter and the second AC/DC converter may be less than a rated power of the respective power source, thereby further reducing the cost of the converter and increasing the power efficiency. According to some embodiments, the hardware setting and the control mechanism of the two AC/DC converters can be optimized to provide improved power efficiency or fast response speed.

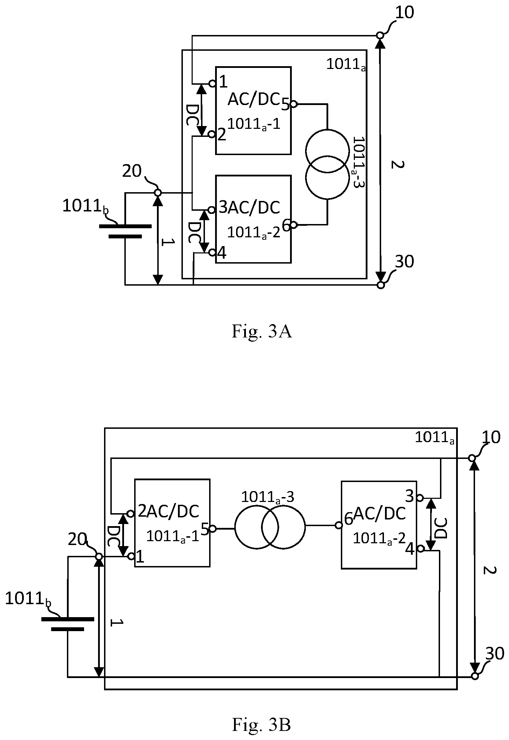

Figs. 3A-3B are schematic diagrams illustrating the connection configuration of the PPC in Fig. 1 according to an embodiment of the present disclosure.

According to some embodiments, as shown in Figs. 3A-3B, the PPC 1011ₐ includes a first AC/DC converter 1011ₐ -1 and a second AC/DC converter 1011ₐ -2. Herein, the term "AC/DC converter" is not intended to limit the conversion directions of AC and DC of the converter. The AC/DC converter may convert DC to AC or convert AC to DC. For example, any of first AC/DC converter 1011ₐ -1 and a second AC/DC converter 1011ₐ -2 may have the following circuit structure: H bridge, IGBT, IGCT, MOSFET, GTO or a single diode, and the like.

According to some embodiments, as shown in Figs. 3A-3B, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms one of the first port and the second port of the PPC 1011ₐ. A DC port of the first AC/DC converter 1011ₐ -1 and the DC port of the second AC/DC converter 1011ₐ -2 are connected in series to form the other of the first port and the second port of the PPC 1011ₐ.

According to some embodiments, the DC port of the first AC-DC converter 1011ₐ -1 and the DC port of the second AC/DC converter 1011ₐ -2 are connected in series to form the other of the first port and the second port of the PPC 1011 means that, for each AC/DC converter, one DC terminal of the DC port is connected to the DC terminal of the DC port of the other AC/DC converter, and the other terminal of the DC port is connected to the terminal of the PPC (i.e., the terminal of the first port and the second port of the PPC).

According to some embodiments, an AC side of the first AC/DC converter 1011ₐ -1 and an AC side of the second AC/DC converter 1011ₐ -2 are electromagnetically coupled or coupled through a capacitor. The "electromagnetically coupled" may refer to being coupled through a transformer 1011ₐ -3 (as shown in Figs. 3A and 3B) or inductor.

According to some embodiments, as shown in Fig. 3A, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms the first port of the PPC 1011ₐ. A DC port of the first AC/DC converter 1011ₐ -1 and the DC port of the second AC/DC converter 1011ₐ -2 are connected in series to form the second port of the PPC 1011ₐ.

According to some embodiments, as shown in Fig. 3A, a DC side of the first AC/DC converter 10 11ₐ -1 has a first DC terminal 1 and a second DC terminal 2, and a DC side of the second AC/DC converter 1011ₐ -2 has a third DC terminal 3 and a fourth DC terminal 4,wherein the first DC terminal 1 is connected to the first terminal 10 of the PPC 1011ₐ, the second DC terminal 2 and the third DC terminal 3 are connected to the second terminal 20 of the PPC 1011ₐ, and the fourth DC terminal 4 is connected to the third terminal 30 of the PPC 1011ₐ. In this case, a part of the power goes directly from the first port to the second port of the PPC 1011ₐ by bypassing the first AC/DC converter 1011ₐ -1 and the second AC/DC converter 1011ₐ -2 and the remaining power is processed by the first AC/DC converter 1011ₐ -1 and the second AC/DC converter 1011ₐ -2 and then delivered to the second port of the PPC 1011ₐ.

According to some embodiments, as shown in Fig. 3B, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms the second port of the PPC 1011ₐ. A DC port of the first AC/DC converter 1011ₐ -1 and the DC port of the second AC/DC converter 1011ₐ -2 are connected in series to form the first port of the PPC 1011ₐ.

According to some embodiments, as shown in Fig. 3B, a DC side of the first AC/DC converter 1011ₐ -1 has a first DC terminal 1 and a second DC terminal 2, and a DC side of the second AC/DC converter 1011ₐ -2 has a third DC terminal 3 and a fourth DC terminal 4, wherein the first DC terminal 1 is connected to the second terminal 20 of the PPC 1011ₐ, the second DC terminal 2 and the third DC terminal 3 are connected to the first terminal 10 of the PPC 1011ₐ, and the fourth DC terminal 4 is connected to the third terminal 30 of the PPC 1011ₐ. In this case, a part of the power goes directly from the first port to the second port of the PPC 1011ₐ by bypassing the first AC/DC converter 1011ₐ -1 and the second AC/DC converter 1011ₐ -2 and the remaining power is processed by the first AC/DC converter 1011ₐ -1 and the second AC/DC converter 1011ₐ -2 and then delivered to the second port of the PPC 1011ₐ.

In some embodiments, a rated power of each of the first AC/DC converter 1011ₐ -1 and the second AC/DC converter 1011ₐ -2 may be less than a rated power of the respective power source 1011_{b}, thereby further reducing the cost of the converter and increasing the power efficiency.

According to some embodiments, when the power of the PPC is uni-directional, instead of being bi-directional, one of the AC/DC converters in the PPC can be set as an uncontrollable rectifier, thereby reducing the cost of the PPC and simplify the controlling logic.

According to some embodiments, for the PPC connected to the PV source, in response to that the DC port of the second AC/DC converter forms the first port, and a DC port of the first AC/DC converter and the DC port of the second AC/DC converter are connected in series to form the second port (i.e., the topology shown in Fig. 3A), the second AC/DC converter comprises at least one controllable switch, and the first AC/DC converter is an uncontrollable rectifier, and in response to that the DC port of the second AC/DC converter forms the second port, and a DC port of the first AC/DC converter and the DC port of the second AC/DC converter are connected in series to form the first port (i.e., the topology shown in Fig. 3B), the first AC/DC converter comprises at least one controllable switch, and the second AC/DC converter is an uncontrollable rectifier. According to the embodiments of the present disclosure, as the PV source is a uni-directional power source, and the PPC connected to the PV source only works at the discharging mode, one of the AC/DC converters in the PPC can be set as an uncontrollable rectifier, thereby reducing the cost of the PPC and simplify the controlling logic.

According to some embodiments, for the PPC connected to the load, in response to that the DC port of the second AC/DC converter forms the first port, and a DC port of the first AC/DC converter and the DC port of the second AC/DC converter are connected in series to form the second port (i.e., the topology shown in Fig. 3A), the first AC/DC converter comprises at least one controllable switch, and the second AC/DC converter is an uncontrollable rectifier, and in response to that the DC port of the second AC/DC converter forms the second port, and a DC port of the first AC/DC converter and the DC port of the second AC/DC converter are connected in series to form the first port (i.e., the topology shown in Fig. 3B), the second AC/DC converter comprises at least one controllable switch, and the first AC/DC converter is an uncontrollable rectifier. According to the embodiments of the present disclosure, as the load can only consume the power, instead of generating power, and the PPC connected to the PV source only works at the charging mode, one of the AC/DC converters in the PPC can be set as an uncontrollable rectifier, thereby reducing the cost of the PPC and simplify the controlling logic.

According to some embodiments, in the PPC, each of the first AC/DC converter and the second AC/DC converter comprises at least one controllable switch. According to the embodiments of the present disclosure, when both the first AC/DC converter and the second AC/DC converter in the PPC includes at least one controllable switch, the PPC can provide bi-directional power transfer, and can also provide fast response speed in the uni-directional power transfer application (e.g., the PV source, the load, etc.).

In some embodiments, when the AC/DC converter is in the controlled mode, at least one controllable switch in the AC/DC converter may be controlled to switch between the open state and the closed state (e.g., according to the PWM signal). In other embodiments, when the AC/DC converter is in the uncontrolled mode, all controllable switches in the AC/DC converter are held open or held closed, wherein holding the switching device open means that the switching device is always at a turn-off state and holding the switching device closed means that the switching device is always at a turn-on state. It should be understood that the current can still go through the parallel-connected diode in the device when the switching device is at a turn-off state. In this way, the unnecessary switching of the switching device can be avoided, thereby increasing the efficiency of the converter and reducing the power loss due to the continuous switching.

In some embodiments, for the bi-direction PPC, both the first AC/DC converter and the second AC/DC converter are in the controlled mode, thereby providing fast response speed. In some embodiments, for the bi-direction PPC, one of the first AC/DC converter and the second AC/DC converter is in the controlled mode, and the other of the first AC/DC converter and the second AC/DC converter is in the uncontrolled mode, thereby saving switching power loss and increasing power efficiency.

According to some embodiments, a method of operating the apparatus of power conversion mentioned above is provided, comprising: determining a mode of the apparatus according to a DC bus voltage of the DC bus, wherein the mode of the apparatus is overvoltage mode, normal mode or undervoltage mode; and controlling the PPCs in the apparatus according to the mode of the apparatus. According to the embodiments of the present disclosure, precise control for the PPC can be provided according to the DC bus voltage, thereby making use of the power sources connected to the apparatus and providing power supply to the load connected to the apparatus.

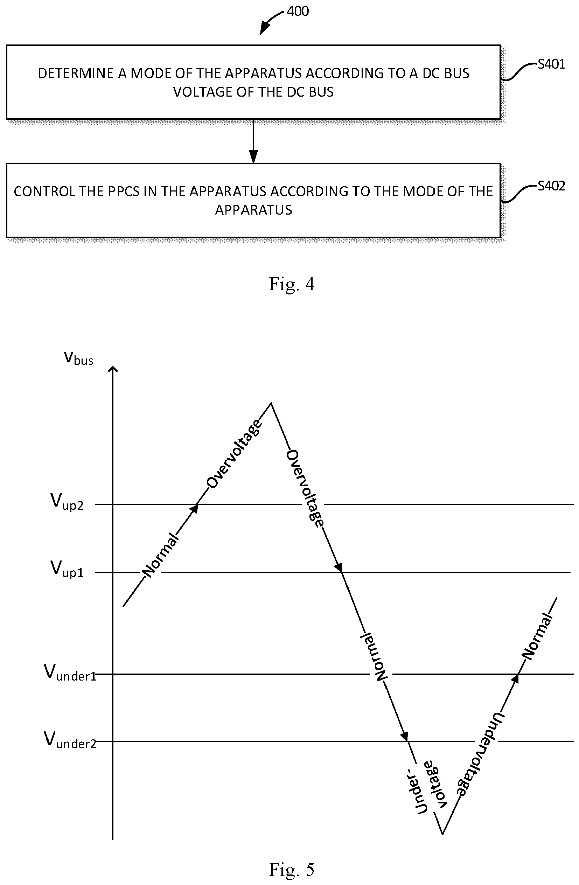

Fig. 4 is a flowchart showing a method 400 for controlling an apparatus for power conversion 1000 in Fig. 1 according to an embodiment of the present disclosure, in which the apparatus for power conversion is substantially the same as described with reference to Fig. 1, and thus the details as to the same features are omitted here for conciseness. As shown in Fig. 4, the method 400 includes the steps S401-S402.

In step S401, a mode of the apparatus is determined according to a DC bus voltage of the DC bus, wherein the mode of the apparatus is overvoltage mode, normal mode or undervoltage mode.

In step S402, the PPCs in the apparatus is controlled according to the mode of the apparatus.

The details of steps S401-S402 are described below.

According to some embodiments, the determining a mode of the apparatus according to a DC bus voltage of the DC bus comprises: in response to the apparatus being in the overvoltage mode and the DC bus voltage being lower than a first upper limit, and the apparatus being in the undervoltage mode and the DC bus voltage being higher than a first under limit, setting the apparatus in the normal mode; in response to the apparatus being in the normal mode and the DC bus voltage being higher than a second upper limit, setting the apparatus in the overvoltage mode, wherein the second upper limit is higher than the first upper limit; and in response to the apparatus being in the normal mode and the DC bus voltage being lower than a second under limit, setting the apparatus in the undervoltage mode, wherein the second under limit is lower than the first lower limit. According to the embodiments of the present disclosure, the ping-pong control of the mode of the apparatus avoids frequent hopping between different modes, thereby improving the stability of the control.

Fig. 5 is a schematic diagram illustrating the modes of the apparatus of power conversion according to an embodiment of the present disclosure.

According to some embodiments, as shown in Fig. 5, when the apparatus is in the normal mode, in response to that the DC bus voltage v_{bus} increases to the second upper limit Vᵤₚ₂, the apparatus changes from the normal mode to the overvoltage mode; when the apparatus is in the overvoltage mode, in response to that the DC bus voltage v_{bus} decreases to the first upper limit Vᵤₚ₁, the apparatus changes from the overvoltage mode to the normal mode.

According to some embodiments, as shown in Fig. 5, the second upper limit Vᵤₚ₂ is higher than the first upper limit Vᵤₚ₁, thereby providing a ping-pang control of the modes of the apparatus, avoiding the frequent hopping between the overvoltage mode and the normal mode. According to some embodiments, the second upper limit Vᵤₚ₂ is equal to the first upper limit Vᵤₚ₁, thereby simplifying the control mechanism.

According to some embodiments, as shown in Fig. 5, when the apparatus is in the normal mode, in response to that the DC bus voltage v_{bus} decreases to the second under limit V_{under2}, the apparatus changes from the normal mode to the undervoltage mode; when the apparatus is in the undervoltage mode, in response to that the DC bus voltage v_{bus} increases to the first under limit V_{under1}, the apparatus changes from the overvoltage mode to the normal mode.

According to some embodiments, as shown in Fig. 5, the second under limit V_{under2} is lower than the first under limit V_{under1}, thereby providing a ping-pang control of the modes of the apparatus, avoiding the frequent hopping between the undervoltage mode and the normal mode. According to some embodiments, the second under limit V_{under2} is equal to the first under limit V_{under1}, thereby simplifying the control mechanism.

According to some embodiments, at least one of the power sources is a PV source, and wherein the controlling the PPCs in the apparatus according to the mode of the apparatus comprises: in response to the apparatus being in the overvoltage mode, generating a total power reference based on a DC bus voltage reference and the DC bus voltage; and controlling the PPCs connected to the load and the PV based on the total power reference, and controlling the power of the PPC connected to the power storage source to be a maximum input power of the corresponding power storage source. According to the embodiments of the present disclosure, the DC bus voltage can be controlled at the expected value, rather than continuing increasing.

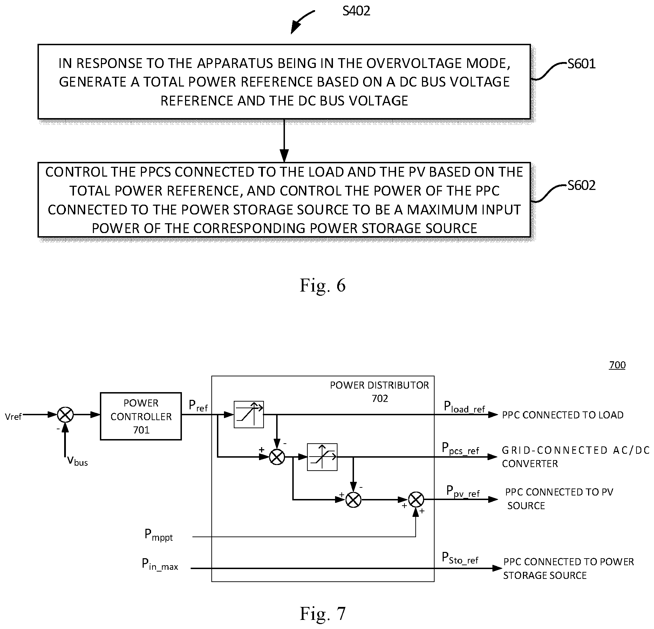

Fig. 6 is a flowchart illustrating the process of controlling the PPCs in the apparatus according to the mode of the apparatus S402 in Fig. 4 according to an embodiment of the present disclosure. As shown in Fig. 6, the process S403 includes the steps S601-602.

In the step S601, in response to the apparatus being in the overvoltage mode, a total power reference based on a DC bus voltage reference and the DC bus voltage is generated.

According to some embodiments, Step S601 can be implemented as the power controller 701 in the controlling loop 700 in Fig. 7, which receives the DC bus voltage reference v_{ref} and the DC bus voltage v_{bus}, and generates a total power reference P_{ref} based on the difference between the DC bus voltage reference v_{ref} and the DC bus voltage v_{bus}.

In the step S602, the PPCs connected to the load and the PV are controlled based on the total power reference, and the power of the PPC connected to the power storage source is controlled to be a maximum input power of the corresponding power storage source.

According to some embodiments, the total power reference is distributed in the priority of the load, the grid-connected AC/DC converter and the PV source, which means the PPC connected to the load, the grid-connected AC/DC converter and the PPC connected to the PV source takes over the DC bus voltage control in sequence.

According to some embodiments, in response to the total power reference being lower than a power capacity of the load, increasing the output power reference of the PPC connected to the load by adding the total power reference, and setting the PPC connected to the PV source at the MPPT mode, wherein the power capacity of the load is a difference between a maximum power of the load connected to the apparatus and a power of the load connected to the apparatus. According to the embodiments of the present disclosure, as more power is consumed by the load, the DC bus voltage is controlled to the DC bus voltage reference, instead of increasing.

The situation of the total power reference being lower than a power capacity of the load is illustrated with reference to following example: The current power consumed by the load connected to the apparatus is 10kW and the maximum power of the load connected to the apparatus is 20kW, the power capacity of the load is (20-10) = 10kW. Assuming that the total power reference is 9kW, which is lower than the power capacity of the load, the total power reference will be undertook by the load, and the output power reference of the PPC connected to the load should be (10+9) = 19kW.

According to some embodiments, in response to the total power reference being higher than or equal to the power capacity of the load and being lower than the sum of power capacity of the load and a power capacity of the grid-connected AC/DC converter, increasing the output power reference of the PPC connected to the load by adding the power capacity of the load, and setting the PPC connected to the PV at the MPPT mode, wherein a output power reference of the grid-connected AC/DC converter is increased by a difference between the total power reference and the power capacity of the load, and the power capacity of the grid-connected AC/DC converter is a difference between a maximum output power of the grid-connected AC/DC converter and a output power of the grid-connected AC/DC converter. According to some embodiments, the output power of a grid-connected AC/DC converter is the power that the grid-connected AC/DC converter feeds back to the grid, and the input power of a grid-connected AC/DC converter is the power that the grid-connected AC/DC converter receives from the grid. According to the embodiments of the present disclosure, as more power is consumed by the load and fed to the grid, the DC bus voltage is controlled to the DC bus voltage reference, instead of increasing.

The situation of the total power reference being higher than or equal to the power capacity of the load and being lower than the sum of power capacity of the load and a power capacity of the grid-connected AC/DC converter is illustrated with reference to following example: The current power fed to the grid by the AC/DC converter is 80kW and the maximum power of the grid-connected AC/DC converter is 100kW, the power capacity of the grid-connected AC/DC converter is (100-80) = 20kW. Assuming that the total power reference is 15kW, and the power capacity of load is 10kW, the total power reference is higher than the power capacity of the load and lower than the sum of the power capacity of the load and the power capacity of the grid-connected AC/DC converter. Accordingly, the total power reference is distributed to the PPC connected to the load, i.e., the output power reference of the PPC connected to the load is increased by adding the power capacity of the load (10kW) at first, and the difference between the total power reference and the power capacity of the load ((15-10) = 5kW) is distributed to the grid-connected AC/DC converter, i.e., the output power reference of the AC/DC inverter is increased by adding the difference (5kW).

According to some embodiments, in response to the total power reference being higher than or equal to the sum of the power capacity of the load connected to the apparatus and a power capacity of the grid-connected AC/DC converter, increasing the output power reference of the PPC connected to the load by adding the power capacity of the load, decreasing the input power reference of the PPC connected to the PV by a difference between the total power reference and the sum of the power capacity of the load connected to the apparatus and the power capacity of the grid-connected AC/DC converter, wherein increasing the power reference of the grid-connected AC/DC converter by adding the power capacity of the grid-connected AC/DC converter. According to the embodiments of the present disclosure, as more power is consumed by the load and fed to the grid, and less power is generated by the PV source, the DC bus voltage is controlled to the DC bus voltage reference, instead of increasing.

The situation of the total power reference being higher than or equal to the sum of the power capacity of the load connected to the apparatus and a power capacity of the grid-connected AC/DC converter is illustrated with reference to following example: Assuming that the total power reference is 35kW, the power capacity of load is 10kW, and the power capacity of the grid-connected AC/DC converter is 20kW, the total power reference is higher than the sum of the power capacity of the load and the power capacity of the grid-connected AC/DC converter. Accordingly, the total power reference is distributed to the PPC connected to the load at first, i.e., the output power reference of the PPC connected to the load is increased by adding the power capacity of the load (10kW) at first; then the remaining power reference is distributed to the grid-connected AC/DC converter, i.e., the output power reference of the grid-connected AC/DC converter is increased by adding the power capacity of the grid-connected AC/DC converter (20kW); and finally, the still remaining power reference is distributed to the PPC connected to the PV, i.e., the input power reference of the PPC connected to the PV is decreased by subtracting a difference between the total power reference and the sum of the power capacity of the load connected to the apparatus and the power capacity of the grid-connected AC/DC converter (5kW).

According to some embodiments, Step S602 can be implemented as the power distributor 702 in the controlling loop 700 in Fig. 7, which receives the total power reference P_{ref} , generates the power reference for the PPC connected to the load P_{load}__{ref}, the power reference for the grid-conencted AC/DC converter P_{pcs}__{ref} and the power reference for the PPC connected to the PV source Pₚᵥ__{ref} in sequence, and sets the power reference for the PPC connected to the power storage source Pₛₜₒ__{ref} at its maximum input power.

According to some embodiments, as the PPC connected to the PV source is usually at the MPPT mode, the power reference for the PPC connected to the PV source is calculated based on the maximum power Pₘₚₚₜ, which may be sent to the power distributor 702 from the MPPT module in the controller of the PPC connected to the PV source.

According to some embodiments, when there are more than one PPCs connected to the load in the apparatus, the total increase of power reference for the load can be distributed between the PPCs connected to the load, for example, the total increase of power reference for the load is 9kW, the output power reference for the first PPC connected to the load can increase by 5kW, and the output power reference for the second PPC connected to the load can increase by 4kW.

According to some embodiments, when there are more than one PPCs connected to the PV source in the apparatus, the total decrease of power reference for the PV source can be distributed between the PPCs connected to the PV source, for example, the total increase of power reference for the PV source is 5kW, the output power reference for the first PV connected to the load can decrease by 3kW, and the output power reference for the first PPC connected to the load can decrease by 2kW.

According to some embodiments, at least one of the power sources is a PV source, and wherein the controlling the PPCs in the apparatus according to the mode of the apparatus comprises: in response to the apparatus being in the normal mode, generating a total power reference based on a DC bus voltage reference and the DC bus voltage; and controlling the PPC connected to the power storage source based on the total power reference, and setting the PPC connected to the PV at the MPPT mode. According to the embodiments of the present disclosure, the power storage source connected to the apparatus can be used to maintain DC bus voltage, while the other power sources (like PV source) can be made full use of, and the power supply of load can be provided through the apparatus.

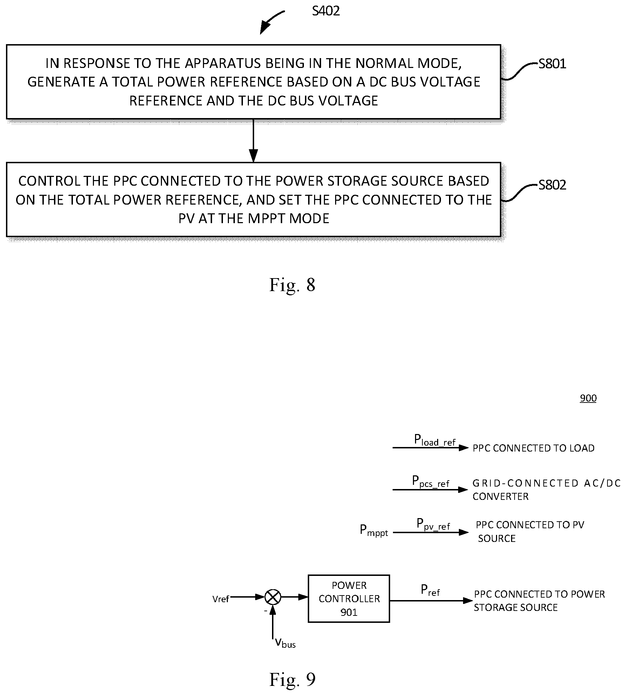

Fig. 8 is a flowchart illustrating the process of controlling the PPCs in the apparatus according to the mode of the apparatus S402 in Fig. 4 according to an embodiment of the present disclosure. As shown in Fig. 8, the process S403 includes the steps S801-802.

In the step S801, in response to the apparatus being in the normal mode, a total power reference based on a DC bus voltage reference and the DC bus voltage is generated.

According to some embodiments, Step S801 can be implemented as the power controller 901 in the controlling loop 900 in Fig. 9, which receives the DC bus voltage reference v_{ref} and the DC bus voltage v_{bus}, and generates a total power reference P_{ref} based on the difference between the DC bus voltage reference v_{ref} and the DC bus voltage v_{bus}.

In the step S802, the PPC connected to the power storage source is controlled based on the total power reference, and the PPC connected to the PV is set at the MPPT mode.

For example, as shown in the controlling loop 900 in Fig. 9, the total power reference Pref is used as the power reference for the PPC connected to the power storage source, while the PPC connected to the PV source is at the MPPT mode, and the power of the PPC connected to the load and the power of the grid-connected AC/DC converter are set according to their own needs (for example, according to the use of the load, or the set power of the grid-connected AC/DC converter).

According to some embodiments, when there exist more than one PPCs connected to the power storage source in the apparatus, the total power reference can be distributed among them. According to some embodiments, based on the respective status parameters of the strings containing the PPC connected to the power storage source and the total power reference, the respective control reference for the strings containing the PPCs connected to the power storage source can be calculated; for each string contains the PPC connected to the power storage source, the respective control reference for each PPC can be calculated based on the control reference for the string and the respective status parameters of the PPCs connected to the power storage source in the string; and for each PPC connected to the power storage source, the PPC can be controlled based on its control reference and its status parameter.

According to some embodiments, at least one of the power sources is a PV source, and wherein controlling the PPCs in the apparatus according to the mode of the apparatus comprises: in response to the apparatus being in the undervoltage mode, generating a total power reference based on a DC bus voltage reference and the DC bus voltage; and controlling the PPC connected to the load based on the total power reference, setting the PPC connected to the PV at the MPPT mode, and controlling the power of the PPC connected to the power storage source to be a maximum output power of the corresponding power storage source. According to the embodiments of the present disclosure, the DC bus voltage can be controlled at the expected value, rather than continuing decreasing.

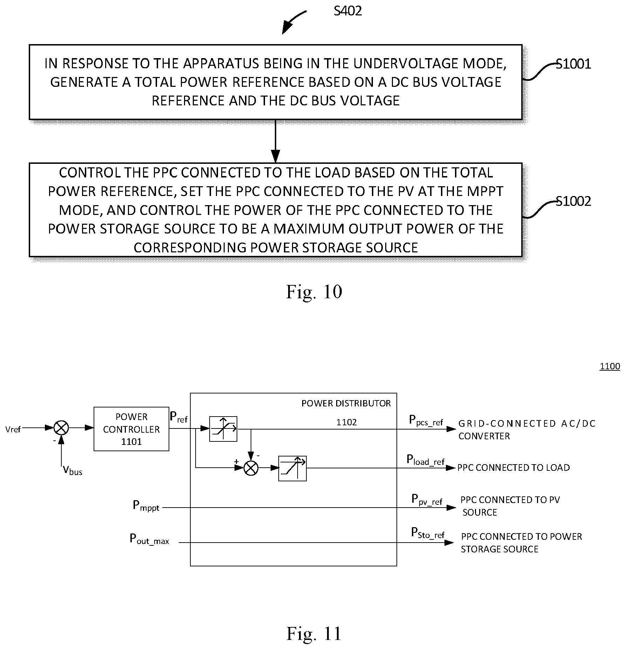

Fig. 10 is a flowchart illustrating the process of controlling the PPCs in the apparatus according to the mode of the apparatus S402 in Fig. 4 according to an embodiment of the present disclosure. As shown in Fig. 10, the process S403 includes the steps S1001-1002.

In the step S1001, in response to the apparatus being in the undervoltage mode, a total power reference based on a DC bus voltage reference and the DC bus voltage is generated.

According to some embodiments, Step S1001 can be implemented as the power controller 1101 in the controlling loop 1100 in Fig. 11, which receives the DC bus voltage reference v_{ref} and the DC bus voltage v_{bus}, and generates a total power reference P_{ref} based on the difference between the DC bus voltage reference v_{ref} and the DC bus voltage v_{bus}.

In the step S1002, the PPC connected to the load is controlled based on the total power reference, the PPC connected to the PV is set at the MPPT mode, and the power of the PPC connected to the power storage source is controlled to be a maximum output power of the corresponding power storage source.

According to some embodiments, the total power reference is distributed in the priority of the grid-connected AC/DC converter and the load, which means he grid-connected AC/DC converter and the PPC connected to the load takes over the DC bus voltage control in sequence.

According to some embodiments, the output power reference of the grid-connected AC/DC converter is decreased by the total power reference in response to the total power reference being lower than the power capacity of the grid-connected AC/DC converter, wherein the power capacity of the grid-connected AC/DC converter is a sum of a output power of the grid-connected AC/DC converter and a maximum input power of the grid-connected AC/DC converter. According to the embodiments of the present disclosure, as less power is fed to the grid, the DC bus voltage is controlled to the DC bus voltage reference, instead of decreasing.

The situation of the total power reference being lower than the power capacity of the grid-connected AC/DC converter is illustrated with reference to following example: The current power fed to the grid by the AC/DC converter is 5kW, and the maximum input power of the grid-connected AC/DC converter is 10kW, the power capacity of the grid-connected AC/DC converter is 15kW. Assuming that the total power reference is 5kW, the total power reference is lower than the power capacity of the grid-connected AC/DC converter. Accordingly, the total power reference is distributed to the grid-connected AC/DC converter, i.e., the output power reference of the AC/DC converter decreases by the total power reference (5kW).

According to some embodiments, in response to the total power reference being higher than or equal to the power capacity of the grid-connected AC/DC converter, decreasing the output power reference of the PPC connected to the load by a difference between the total power reference and the power capacity of the grid-connected AC/DC converter, wherein a output power reference of the grid-connected AC/DC converter is decreased by the power capacity of the grid-connected AC/DC converter. According to the embodiments of the present disclosure, as less power is fed to the grid and less power is consumed by the load, the DC bus voltage is controlled to the DC bus voltage reference, instead of decreasing.

The situation of the total power reference being higher than the power capacity of the grid-connected AC/DC converter is illustrated with reference to following example: Assuming that the total power reference is 20kW, the power capacity of the grid-connected AC/DC converter is 15kW, the total power reference is higher than the power capacity of the grid-connected AC/DC converter. Accordingly, the total power reference is distributed to the grid-connected AC/DC converter, i.e., the output power reference of the AC/DC converter decreases by the total power reference (15kW); and then the remaining power reference is distributed to the PPC connected to the load, i.e., the output power reference of the PPC connected to the load is decreased by the difference between the total power reference and the power capacity of the grid-connected AC/DC converter ((20-15) = 5kW).

According to some embodiments, Step S1002 can be implemented as the power distributor 1102 in the controlling loop 1100 in Fig. 11, which receives the total power reference P_{ref} , generates the power reference for the grid-connected AC/DC converter P_{pcs_ref} and the power reference for the PPC connected to the load P_{load_ref} in sequence, and sets the power reference for the PPC connected to the PV source Pₚᵥ__{ref} and the power reference for the PPC connected to the power storage source Pₛₜₒ__{ref} at their maximum output power respectively.

According to some embodiments, for the AC/DC converters in the PPC described with reference to Fig. 3A-3B, when the DC port of the second AC/DC converter forms the first port, and a DC port of the first AC/DC converter and the DC port of the second AC/DC converter are connected in series to form the second port (i.e., the topology shown in Fig. 3A), controlling the first AC/DC converter of the PPC based on a respective control signal for the PPC, and setting the second AC/DC converter in an uncontrolled mode when the PPC is in the charging mode, and controlling the second AC/DC converter of the PPC based on the respective control signal for the PPC, and setting the first AC/DC converter in the uncontrolled mode when the PPC is in the discharging mode; and when the DC port of the second AC/DC converter forms the second port, and the DC port of the first AC/DC converter and the DC port of the second AC/DC converter are connected in series to form the first port (i.e., the topology shown in Fig. 3B), controlling the first AC/DC converter of the PPC based on the respective control signal for the PPC, and setting the second AC/DC converter in an uncontrolled mode when the PPC is in the discharging mode, and controlling the second AC/DC converter of the PPC based on the respective control signal for the PPC, and setting the first AC/DC converter in the uncontrolled mode when the PPC is in the charging mode; and wherein, in the uncontrolled mode, all controllable switches in the AC/DC converter are held open or held closed. According to the embodiments of the present disclosure, by setting one AC/DC converter in the uncontrolled mode, the switching loss can be reduced, the power efficiency can be improved and the controlling mechanism can be simplified.

According to the embodiments of the present disclosure, a system for power conversion is provided, which includes: the above apparatus of power conversion; a DC bus; and a plurality of power sources and at least one load connected to the apparatus.

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The foregoing descriptions are merely preferred embodiments of the present disclosure and explanations of the applied technical principles. Those skilled in the art should understand that the scope of the present disclosure involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the present disclosure.

## Claims

1. An apparatus for power conversion comprising:
at least one of a first partial power converter (PPC) string and a second PPC string,
wherein the first PPC string comprising more than one series-connected PPCs, wherein respective second port of the more than one series-connected PPCs are connected in series to further connect to a DC bus; and
wherein the second PPC string comprising at least one series-connected PPC and at least one PPC set, wherein each PPC set comprises more than one parallel-connected PPCs, the respective second ports of the more than one parallel-connected PPCs are connected in parallel and further connected to a port of the PPC set, and respective second ports of the at least one series-connected PPC and the port of the at least one PPC set are connected in series to further connect to the DC bus,
wherein, for each PPC in the apparatus, a first port of the PPC and the second port of the PPC have one common terminal, and
wherein the at least one of the first PPC string and the second PPC string is connected in parallel with a DC bus, and
wherein, the first port of at least one PPC in the apparatus is connected to a load, while the respective first ports of other PPCs in the apparatus are connected to power sources, wherein at least one of the power sources is a power storage source.

2. The apparatus according to claim 1, wherein the at least one of the first PPC string and the second PPC string is further connected to a grid-connected AC/DC converter,
wherein an input of the grid-connected AC/DC converter is connected to the DC bus, and an output of the grid-connected AC/DC converter is connected to the gird.

3. The apparatus according to claim 1 or 2, wherein at least one of the power sources is a PV source.

4. The apparatus according to claim 3, wherein the PPC in the apparatus includes a first AC/DC converter and a second AC/DC converter coupled at AC ports of the first AC/DC converter and the second AC/DC converter, and
wherein a DC port of the second AC/DC converter forms one port of the first port and the second port of the PPC, and a DC port of the first AC/DC converter and the DC port of the second AC/DC converter are connected in series to form the other port of the first port and the second port.

5. The apparatus according to claim 4, wherein, for the PPC connected to the PV source, in response to that the DC port of the second AC/DC converter forms the first port, and a DC port of the first AC/DC converter and the DC port of the second AC/DC converter are connected in series to form the second port, the second AC/DC converter comprises at least one controllable switch, and the first AC/DC converter is an uncontrollable rectifier, and
in response to that the DC port of the second AC/DC converter forms the second port, and a DC port of the first AC/DC converter and the DC port of the second AC/DC converter are connected in series to form the first port, the first AC/DC converter comprises at least one controllable switch, and the second AC/DC converter is an uncontrollable rectifier.

6. The apparatus according to claim 4, wherein, for the PPC connected to the load, in response to that the DC port of the second AC/DC converter forms the first port, and a DC port of the first AC/DC converter and the DC port of the second AC/DC converter are connected in series to form the second port, the first AC/DC converter comprises at least one controllable switch, and the second AC/DC converter is an uncontrollable rectifier, and
in response to that the DC port of the second AC/DC converter forms the second port, and a DC port of the first AC/DC converter and the DC port of the second AC/DC converter are connected in series to form the first port, the second AC/DC converter comprises at least one controllable switch, and the first AC/DC converter is an uncontrollable rectifier.

7. The apparatus according to claim 4, wherein, in the PPC, each of the first AC/DC converter and the second AC/DC converter comprises at least one controllable switch.

8. A method of operating the apparatus of power conversion according to claim 1, comprising:
determining a mode of the apparatus according to a DC bus voltage of the DC bus, wherein the mode of the apparatus is overvoltage mode, normal mode or undervoltage mode; and
controlling the PPCs in the apparatus according to the mode of the apparatus.

9. The method according to claim 8, wherein the string of PPCs in the apparatus is further connected to a grid-connected AC/DC converter, wherein an input of the grid-connected AC/DC converter is connected to the DC bus, and an output of the grid-connected AC/DC converter is connected to the gird, and wherein at least one of the power sources is a PV source, and
wherein the controlling the PPCs in the apparatus according to the mode of the apparatus comprises:
in response to the apparatus being in the overvoltage mode, generating a total power reference based on a DC bus voltage reference and the DC bus voltage; and
controlling the PPCs connected to the load and the PV based on the total power reference, and controlling the power of the PPC connected to the power storage source to be a maximum input power of the corresponding power storage source.

10. The method according to claim 9, wherein the controlling the PPCs connected to the load and the PV based on the total power reference comprises:
in response to the total power reference being lower than a power capacity of the load, increasing the output power reference of the PPC connected to the load by adding the total power reference, and setting the PPC connected to the PV source at the MPPT mode, wherein the power capacity of the load is a difference between a maximum power of the load connected to the apparatus and a power of the load connected to the apparatus;
in response to the total power reference being higher than or equal to the power capacity of the load and being lower than the sum of power capacity of the load and a power capacity of the grid-connected AC/DC converter, increasing the output power reference of the PPC connected to the load by adding the power capacity of the load, and setting the PPC connected to the PV at the MPPT mode, wherein a output power reference of the grid-connected AC/DC converter is increased by a difference between the total power reference and the power capacity of the load, and the power capacity of the grid-connected AC/DC converter is a difference between a maximum output power of the grid-connected AC/DC converter and a output power of the grid-connected AC/DC converter; and
in response to the total power reference being higher than or equal to the sum of the power capacity of the load connected to the apparatus and a power capacity of the grid-connected AC/DC converter, increasing the output power reference of the PPC connected to the load by adding the power capacity of the load, decreasing the input power reference of the PPC connected to the PV by a difference between the total power reference and the sum of the power capacity of the load connected to the apparatus and the power capacity of the grid-connected AC/DC converter, wherein the output power reference of the grid-connected AC/DC converter is increased by adding the power capacity of the grid-connected AC/DC converter.

11. The method according to claim 8, wherein the string of PPCs in the apparatus is further connected to a grid-connected AC/DC converter, wherein an input of the grid-connected AC/DC converter is connected to the DC bus, and an output of the grid-connected AC/DC converter is connected to the gird, and wherein at least one of the power sources is a PV source, and
wherein the controlling the PPCs in the apparatus according to the mode of the apparatus comprises:
in response to the apparatus being in the normal mode, generating a total power reference based on a DC bus voltage reference and the DC bus voltage; and
controlling the PPC connected to the power storage source based on the total power reference, and setting the PPC connected to the PV at the MPPT mode.

12. The method according to claim 8, wherein the string of PPCs in the apparatus is further connected to a grid-connected AC/DC converter, wherein an input of the grid-connected AC/DC converter is connected to the DC bus, and an output of the grid-connected AC/DC converter is connected to the gird, and wherein at least one of the power sources is a PV source, and
wherein controlling the PPCs in the apparatus according to the mode of the apparatus comprises:
in response to the apparatus being in the undervoltage mode, generating a total power reference based on a DC bus voltage reference and the DC bus voltage; and
controlling the PPC connected to the load based on the total power reference, setting the PPC connected to the PV at the MPPT mode, and controlling the power of the PPC connected to the power storage source to be a maximum output power of the corresponding power storage source.

13. The method according to claim 12, wherein the controlling the PPCs connected to the load based on the total power reference comprises:
in response to the total power reference being higher than or equal to a power capacity of the grid-connected AC/DC converter, decreasing the output power reference of the PPC connected to the load by a difference between the total power reference and a power capacity of the grid-connected AC/DC converter, wherein a output power reference of the grid-connected AC/DC converter is decreased by the power capacity of the grid-connected AC/DC converter, and the power capacity of the grid-connected AC/DC converter is a sum of a output power of the grid-connected AC/DC converter and a maximum input power of the grid-connected AC/DC converter,
wherein the output power reference of the grid-connected AC/DC converter is decreased by the total power reference in response to the total power reference being lower than the power capacity of the grid-connected AC/DC converter.

14. The method according to claim 8, wherein the determining a mode of the apparatus according to a DC bus voltage of the DC bus comprises:
in response to the apparatus being in the overvoltage mode and the DC bus voltage being lower than a first upper limit, or the apparatus being in the undervoltage mode and the DC bus voltage being higher than a first under limit, setting the apparatus in the normal mode;
in response to the apparatus being in the normal mode and the DC bus voltage being higher than a second upper limit, setting the apparatus in the overvoltage mode, wherein the second upper limit is higher than the first upper limit; and
in response to the apparatus being in the normal mode and the DC bus voltage being lower than a second under limit, setting the apparatus in the undervoltage mode, wherein the second under limit is lower than the first lower limit.

15. The method according to claim 8, the PPC in the apparatus includes a first AC/DC converter and a second AC/DC converter coupled at AC ports of the first AC/DC converter and the second AC/DC converter, and wherein a DC port of the second AC/DC converter forms one port of the first port and the second port of the PPC, and a DC port of the first AC/DC converter and the DC port of the second AC/DC converter are connected in series to form the other port of the first port and the second port, and each of the first AC/DC converter and the second AC/DC converter comprises at least one controllable switch, and
wherein the controlling the PPCs in the apparatus according to the mode of the apparatus comprises:
in response to that the DC port of the second AC/DC converter forms the first port, and a DC port of the first AC/DC converter and the DC port of the second AC/DC converter are connected in series to form the second port, controlling the first AC/DC converter of the PPC based on a respective control signal for the PPC, and setting the second AC/DC converter in an uncontrolled mode when the PPC is in the charging mode, and controlling the second AC/DC converter of the PPC based on the respective control signal for the PPC, and setting the first AC/DC converter in the uncontrolled mode when the PPC is in the discharging mode; and
in response to that the DC port of the second AC/DC converter forms the second port, and the DC port of the first AC/DC converter and the DC port of the second AC/DC converter are connected in series to form the first port, controlling the first AC/DC converter of the PPC based on the respective control signal for the PPC, and setting the second AC/DC converter in an uncontrolled mode when the PPC is in the discharging mode, and controlling the second AC/DC converter of the PPC based on the respective control signal for the PPC, and setting the first AC/DC converter in the uncontrolled mode when the PPC is in the charging mode,
wherein, in the uncontrolled mode, all controllable switches in the AC/DC converter are held open or held closed.
